# EUROPEAN PATENT APPLICATION

(11) **EP 3 907 499 A1**
(43) Date of publication of application: **10.11.2021**
(21) Application number: 20173665.9
(22) Date of filing: 08.05.2020
(51) Int. Cl.: G01N 23/20025

(54) **DEVICE AND METHOD FOR IN-OPERANDO MONITORING OF AN ELECTROCHEMICAL CELL**

(71) Applicant: ETH Zurich, 8092 Zurich (CH)
(72) Inventor: Kundu, Dipan, Kensington, 2033 (AU); Niederberger, Markus, 6386 Wolfenschiessen (CH); Kyburz, Till, 8050 Zürich (CH)
(74) Representative: Schulz Junghans Patentanwälte PartGmbB

(57) **Abstract**

The invention relates to a device (1) for in-operando monitoring of an electrochemical cell comprising a chamber (60) for receiving a cathode (70), an anode (90) and an electrolyte (80), wherein the device (1) comprises a window (30) which is transparent to an electromagnetic radiation, wherein the window (30) is arranged such that the electromagnetic radiation may enter and/or exit the chamber (60) through the window (30), wherein the window (30) comprises a first surface (32) facing the chamber (60) and a second surface (33) opposite the first surface (32), wherein the second surface (33) comprises a convex shape.

Furthermore, the invention relates to a method for in-operando monitoring of an electrochemical cell using the device.

## Description

The invention relates to a device and a method for in-operando monitoring (also termed in-situ monitoring) of an electrochemical cell.

In-operando monitoring is defined herein as monitoring an electrochemical cell during its operation, i.e. while the electrochemical cell is discharged or charged by applying or drawing electrical energy. Monitoring may incorporate spectroscopic analysis (e.g. by X-ray spectroscopy, UV-Vis spectroscopy or Raman spectroscopy) as well as electrochemical measurements, such as determining a voltage, a current, an impedance, a resistance or a conductivity of the electrochemical cell.

The mechanistic understanding of battery electrode materials is key to improve their properties and enhance the battery performance. Operando/ in-situ analyses of battery electrodes can provide a real-time understanding of battery working principles and degradation mechanisms of batteries. For example, operando X-ray analysis can reveal detailed microscopic insight into the electrode material's structure-battery performance relationship, relation of the battery failure to any change in structure composition and ideal conditions to optimize the battery performance.

Prior art document DE 20 2016 104 543 U1 describes a device for in-operando monitoring of an electrochemical cell comprising a chamber delimited by a plate-shaped working electrode being at the same time the sample which is monitored during operation by X-ray photoelectron spectroscopy.

US 7,022,290 describes a further in-operando electrochemical cell which can be monitored by x-ray irradiation through a window member delimiting a chamber to obtain x-ray diffraction data of the components of the electrochemical cell. The document US 9,022,652 discloses a similar device, where an electrochemical cell is irradiated by X-rays through an X-ray transparent window for in-situ monitoring.

Furthermore, RU 2620022 describes an in-operando electrochemical cell comprising a housing with a chamber configured to receive an electrolyte and an auxiliary electrode, a porous conductive substrate with a graphene layer on its outer surface acting as a working electrode and a window for spectral measurements, e.g. IR spectroscopy, Raman spectroscopy, X-ray photoelectron spectroscopy or X-ray absorption spectroscopy.

Due to their geometries, these devices of the prior art are restricted to a limited angular range of the incident electromagnetic radiation during spectroscopic measurements, which is of particular disadvantage for X-ray spectroscopy methods, such as X-ray diffraction.

Furthermore, many of the in-operando solutions according to the state of the art are designed for specific battery types and compatible only with certain spectroscopic devices.

Moreover, these devices are often complex and difficult to assemble or difficult to use.

Finally, hazardous materials, such as Beryllium, are used in some components of the devices according to the prior art.

Therefore, the objective underlying the present invention is to provide a device and a method for in-operando monitoring of an electrochemical cell which is improved in view of the above-discussed disadvantages of the prior art.

This objective is attained by the subject matter of the independent claims. Embodiments of the invention are specified in the dependent claims and described hereafter.

A first aspect of the invention relates to a device for in-operando monitoring of an electrochemical cell comprising a chamber for receiving a cathode, an anode and an electrolyte (the cathode, the electrolyte and the anode forming an electrochemical cell), wherein the device comprises a window which is at least partially transparent to an electromagnetic radiation, particularly X-rays, UV radiation, infrared radiation or visible light, wherein the window is arranged such that the electromagnetic radiation may enter and/or exit the chamber through the window.

In certain embodiments, the window comprises a first surface facing the chamber and a second surface opposite the first surface, wherein the second surface comprises a convex shape.

A surface having a convex shape, within the context of the present specification, is an outwardly curved surface.

Advantageously, the convex shape of the outer (second) surface of the window allows electromagnetic radiation, such as X-rays and light, to enter and exit the chamber through the window at a much smaller angle than in-operando electrochemical cells of the prior art.

The window is at least partially transparent to an electromagnetic radiation, meaning that the window does not completely absorb or reflect the electromagnetic radiation, but that at least a part of the radiation enters the chamber through the window and/or exits the chamber through the window.

The electromagnetic radiation can be used, in particular, for spectroscopic analysis of components of the electrochemical cell in the chamber.

In certain embodiments, the device extends along a longitudinal axis, wherein the window extends perpendicular to the longitudinal axis.

In certain embodiments, the device comprises a cylindrical shape, wherein the longitudinal axis is the central cylinder axis of the device.

In certain embodiments, the window is configured, particularly shaped and arranged, (particularly by its convex outer/second surface) such that the electromagnetic radiation is able to enter and/or exit the chamber through the window at an angle, particularly a minimum angle, between an incident beam of the electromagnetic radiation entering the chamber through the window and a reflected or scattered beam of the electromagnetic radiation exiting the chamber through the window, wherein the angle is less than 15°. In particular, the angle is less than 10°. More particularly, the angle is less than 5°. Even more particularly, the angle is less than 3°.

Of course, an embodiment where the electromagnetic radiation is able to enter and/or exit the chamber through the window at a certain angle (e.g. 5°) does not exclude the selection of larger angles. Typically, during an X-ray diffraction analysis, the angle between the incident radiation and the reflected or scattered radiation is changed, particularly continuously, from a minimum value to a maximum value. The present invention advantageously allows to reduce said minimum value compared to in-operando electrochemical cells of the prior art, resulting in improved data of the electrochemical cell.

In certain embodiments, the window is configured, particularly shaped and arranged, (particularly by its convex outer/second surface) such that the electromagnetic radiation is able to enter and/or exit the chamber through the window at an angle between an incident beam of the electromagnetic radiation entering the chamber through the window and a reflected or scattered beam of the electromagnetic radiation exiting the chamber through the window, wherein the angle ranges between 3° and 100°.

In certain embodiments, the device comprises a first part comprising an opening, a second part and a window part, wherein the window part covers the opening, thereby forming the window, wherein particularly the window part is bent by means of a force exerted on the window part by the second part, such that the convex shape of the second surface of the window is generated.

In certain embodiments, the force is exerted on the window part by a cylinder portion of the second part, wherein particularly a diameter of the cylinder portion perpendicular to the longitudinal axis is smaller than the diameter of the opening of the first part (perpendicular to the longitudinal axis.

Thereby, given a sufficient flexibility of the window part, the window is bent into the opening towards the exterior of the device by the exerted force, resulting in the convex shape.

This allows generating a convex outer surface of a planar window part, which is less complex and more cost-efficient compared to a window part where the convex shape is premanufactured.

In certain embodiments, the chamber is formed between the window part and the second part, particularly a surface of the second part.

In certain embodiments, the second part forms the anode or is in electrically conductive contact with the anode.

In certain embodiments, the device comprises a sealing part contacting the first part, the second part and the window part, wherein the sealing part is configured to seal the chamber from the exterior of the device.

In certain embodiments, the second part comprises an indentation, wherein a seal is arranged in the indentation, wherein the seal contacts the sealing part to seal between the second part and the sealing part.

In certain embodiments, the sealing part comprises a first groove, wherein a first gasket is arranged in the first groove, wherein the first gasket contacts the window part to seal between the sealing part and the window part.

In certain embodiments, the sealing part comprises a second groove, wherein a second gasket is arranged in the second groove, wherein the second gasket contacts the first part to seal between the sealing part and the first part.

In certain embodiments, the sealing part comprises a third groove, wherein a third gasket is arranged in the third groove, wherein the third gasket contacts the second part to seal between the sealing part and the second part.

The sealing part as well as the seal in the indentation of the second part prevent leakage or contamination of the electrolyte and other components of the electrochemical cell in an easy manner.

Furthermore, a sealing part with more than one groove for insertion of gaskets advantageously integrates several sealing functions in one part, which reduces complexity of the device and facilitates its assembly.

In certain embodiments, the sealing part is formed from an electrically insulating material, wherein particularly the sealing part is arranged between the first part and the second part.

This is especially advantageous if the first part is in electrically conductive contact with the cathode, and the second part serves as the anode or is in electrically conductive contact with the anode. The double functionality of the sealing part for sealing of the chamber and electrical insulation reduces the complexity and facilitates assembly of the device.

In certain embodiments, the window, particularly the window part, is electrically conductive, wherein the window forms the cathode or the window forms a current collector in electrically conductive contact with the cathode.

This obviates the need of a separate cathode / current collector and thereby reduces the complexity of the device.

In certain embodiments, the first part is in electrically conductive contact with the window, particularly the window part.

In certain embodiments, the window, particularly the window part, is electrically conductive, wherein the window forms the cathode or a current collector, wherein the first part is in electrically conductive contact with the window, particularly the window part.

In certain embodiments, the window, particularly the window part, is transparent to X-ray radiation, wherein particularly the window, particularly the window part, comprises or consists of glassy carbon, particularly black glassy carbon, or polyimide.

In certain embodiments, the window, particularly the window part, is transparent to visible light, infrared radiation and/or UV light, wherein particularly the window, particularly the window part, comprises or consists of polyimide or polyethylene terephthalate. A window from polyimide is especially suitable for UV-Vis measurements, whereas a window from polyethylene terephthalate (due to its lack of fluorescence) is particularly well suited for Raman spectroscopy of the electrochemical cell.

In addition to their transparency for certain electromagnetic radiation, the materials stated above are sufficiently flexible to be bent to obtain a convex shape of the window.

In certain embodiments, the device comprises an insulating part from an electrically insulating material, wherein particularly the insulating part is arranged between the first part and the second part.

Such an insulating part provides electrical insulation between the first part and the second part, especially if the first part is in electrically conductive contact with the cathode, and the second part serves as the anode or is in electrically conductive contact with the anode.

In certain embodiments, the first part and the second part each comprise a plurality of first through-holes, wherein each first through-hole of the first part is aligned with a corresponding first through-hole of the second part, in particular such that the first part and the second part are connectable by connecting member, particularly screws or bolts, inserted into the aligned first through-holes of the first part and the second part.

Thereby, the first part and the second part can be tightly connected in an easy manner while particularly providing a force (e.g. by the cylinder portion of the second part) on the window to generate the convex shape of the second surface of the window.

In certain embodiments, the first through-holes of the first part or the first through-holes of the second part comprise an inner thread configured to engage a corresponding outer thread of the connecting members.

In certain embodiments, the first part comprises a bore for connecting a first electrical lead to the first part.

In certain embodiments, the second part comprises a bore for connecting a second electrical lead to the second part.

In certain embodiments, the first part comprises a bore for connecting a first electrical lead to the first part, and the second part comprises a bore for connecting a second electrical lead to the second part, particularly such that the electrochemical cell can be discharged or charged by applying or drawing electrical energy by means of the first electrical lead and the second electrical lead.

A second aspect of the invention relates to a method for in-operando monitoring of an electrochemical cell using the device according to the first aspect of the invention, wherein a cathode, an anode and an electrolyte are received in the chamber of the device (the cathode, the electrolyte and the anode forming an electrochemical cell), and wherein an electromagnetic radiation is provided, wherein the electromagnetic radiation enters the chamber through the window, and wherein reflected or scattered electromagnetic radiation exiting the chamber through the window is detected.

In certain embodiments, the electromagnetic radiation comprises or consists of X-rays, UV radiation, infrared radiation or visible light.

In certain embodiments, a voltage, a current, a conductivity, an electrical impedance or an electrical resistance between the cathode and the anode is detected, particularly measured.

In certain embodiments, the reflected or scattered electromagnetic radiation exiting the chamber is analyzed spectroscopically.

In certain embodiments, the electromagnetic radiation enters and/or exits the chamber through the window at an angle, particularly a minimum angle, between an incident beam of the electromagnetic radiation entering the chamber through the window and a reflected or scattered beam of the electromagnetic radiation exiting the chamber through the window, wherein particularly the angle is less than 15°, more particularly less than 10°, even more particularly less than 5°, most particularly less than 3°.

In certain embodiments, the electromagnetic radiation comprises or consists of X-rays, wherein the angle between the incident radiation and the reflected or scattered radiation is changed, particularly continuously, from a minimum value, particularly 3° to 15° to a maximum value, particularly 100°.

In certain embodiments, the angle ranges between 3° and 100°.

All embodiments described above for the first aspect are also envisioned to be analogously applied to the method according to the second aspect within the scope of the present invention.

Wherever alternatives for single separable features are laid out herein as "embodiments", it is to be understood that such alternatives may be combined freely to form discrete embodiments of the invention disclosed herein.

The invention is further illustrated by the following examples and figures, from which further embodiments and advantages can be drawn. These examples are meant to illustrate the invention but not to limit its scope.
- Fig. 1: shows schematic representations of the device according to the invention;
- Fig. 2: shows a partial cutaway view of the device according to an embodiment of the invention;
- Fig. 3: shows a perspective view of the bottom side of the device shown in Fig. 2;
- Fig. 4: shows a perspective view of the first part of the device shown in Fig. 2 and 3 viewed from a top side;
- Fig. 5: shows a perspective view of the first part of the device shown in Fig. 2 and 3 viewed from a bottom side;
- Fig. 6: shows a side view of the second part of the device shown in Fig. 2 and 3;
- Fig. 7: shows a perspective view of the second part of the device shown in Fig. 2 and 3;
- Fig. 8: shows a perspective view of the sealing part of the device shown in Fig. 2 and 3;
- Fig. 9: shows a perspective view of the insulating part of the device shown in Fig. 2 and 3;
- Fig. 10: shows X-ray diffraction patterns of a Na-ion battery cathode of an electrochemical cell as a function of the Na⁺ storage using the device according to the invention;
- Fig. 11: shows the results of in-situ X-ray-diffraction data (a and b) and in-situ solid-state UV-Vis spectroscopic analysis (c and d) of an organic cathode material for aqueous zinc batteries using the device according to the invention.

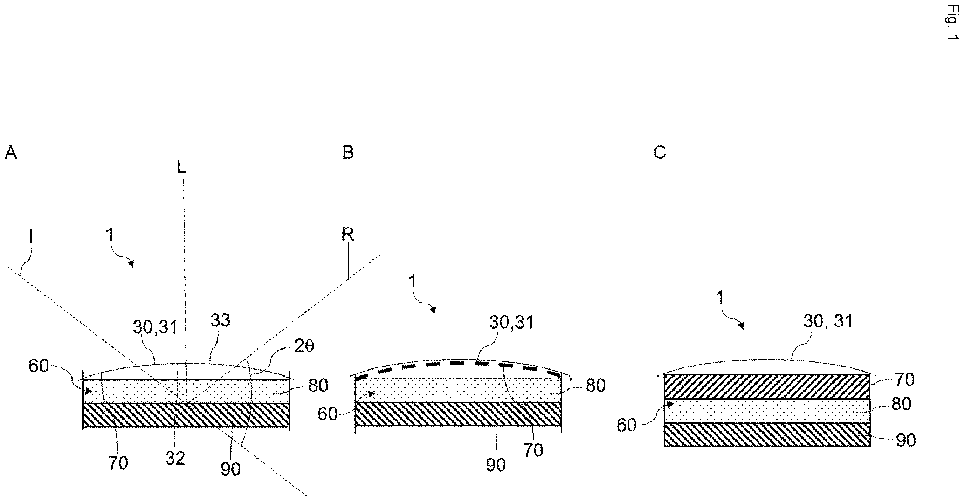

Fig. 1A to C depict schematic representations of embodiments of the device 1 according to the present invention, the device 1 comprising a chamber 60 harboring an electrochemical cell comprising a cathode 70, an electrolyte 80 and an anode 90. The device 1 further comprises a window 30 formed by a window part 31 and having a first surface 32 facing the chamber 60 and a second surface 33 opposite the first surface 32 facing outside of the device 1. The second surface 33 is convex-shaped and thereby curved towards the outside of the device 1. The first surface 32 may have a concave shape as depicted in Fig. 1A to C or any other suitable shape.

According to the embodiment of Fig. 1A, the cathode 70 is formed by the window part 31, wherein the window part 31 is formed from an electrically conductive material, such as black glassy carbon.

Alternatively, as shown in Fig. 1B, the cathode 70 may be formed from a mesh of an electrically conductive material which is coated on or in contact with the first surface 32 of the window 30 or window part 31.

According to a third alternative, as shown in Fig. 1C, the cathode 70 may be disposed within the chamber 60 in a layer-like structure, where the anode 90, the electrolyte 80, particularly disposed in a separator structure, and the cathode 70 are stacked in the chamber 60, wherein particularly the cathode 70 does not contact the first surface 32 of the window 30 or window part 31.

Fig. 1A further shows an incident beam I and a reflected beam R of an electromagnetic radiation, e.g. x-rays. The incident beam I enters the chamber 60 through the window 30 and is reflected or scattered on components of the electrochemical cell in the chamber 60, thereby generating the reflected beam R which exits the chamber 60 through the window 30. An angle 2θ between the incident beam I and the reflected beam R is indicated in Fig. 1A.

Due to the convex shape of the second surface 33 of the window 30 or window part 31, the electrochemical cell can be monitored e.g. by x-ray diffraction at a very small angle 2θ (down to about 3°) between the incident beam I and the reflected beam R, which is highly advantageous for data collection by x-ray diffraction.

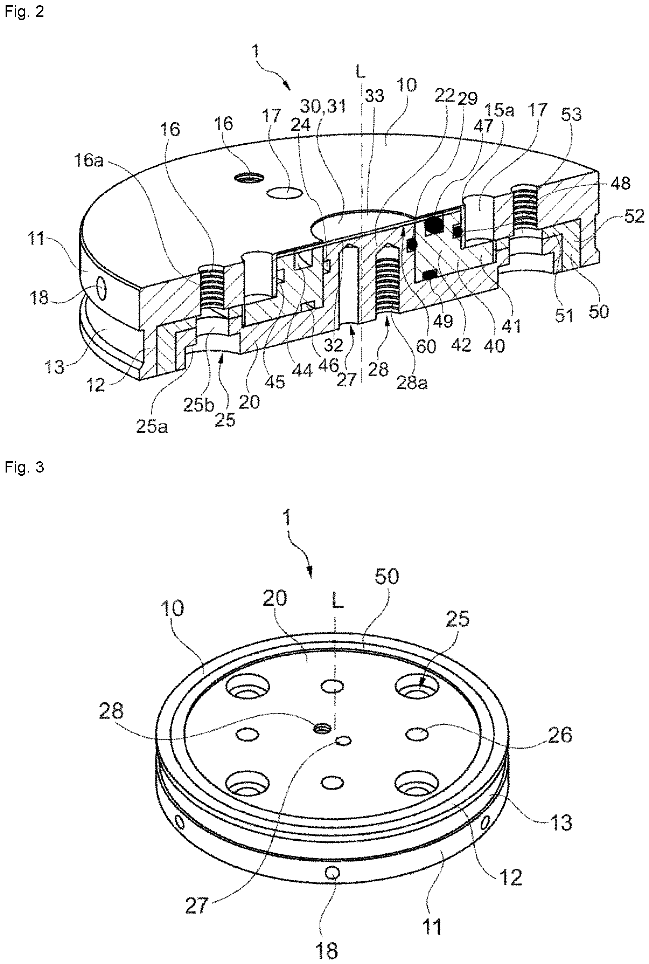

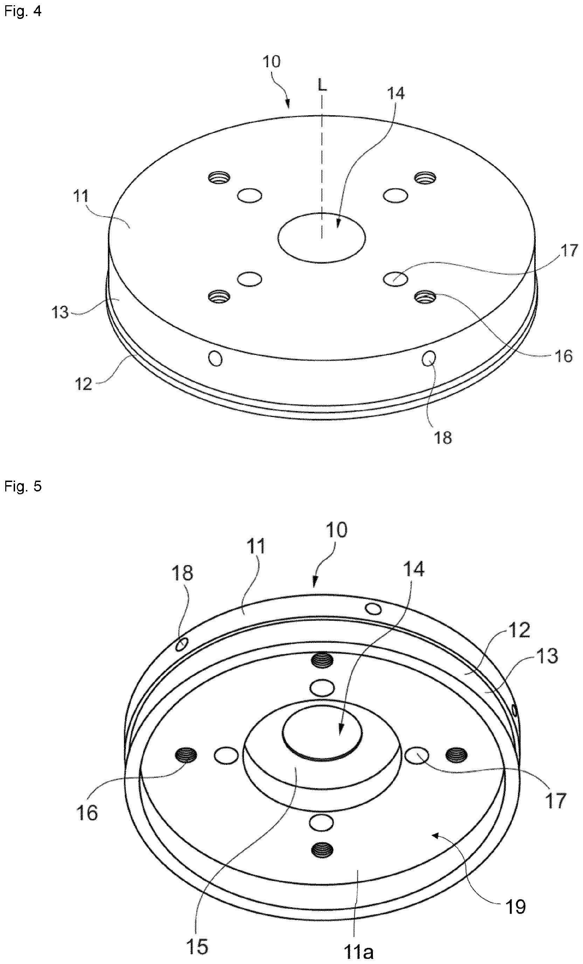

A specific embodiment of the device 1 according to the invention is shown in Fig. 2 and 3, and separate parts of the device 1 shown in Fig. 4 to 9.

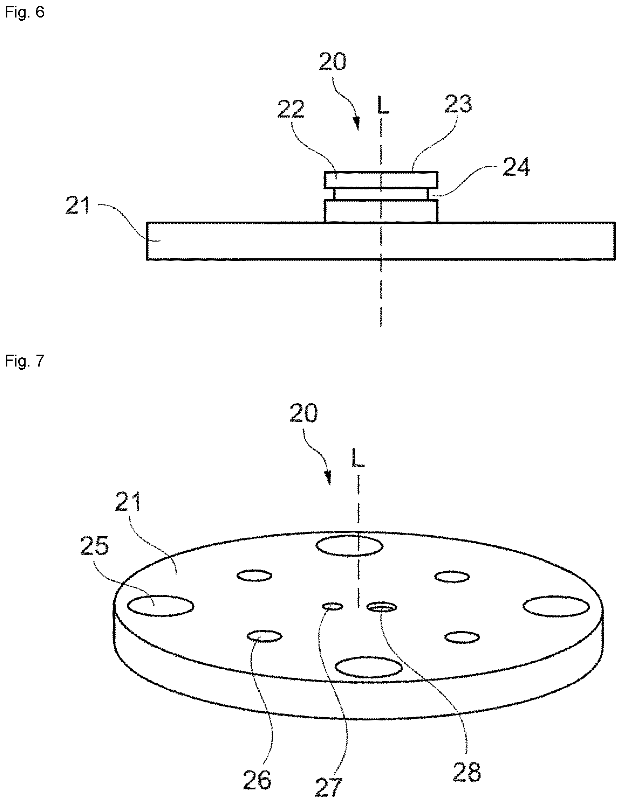

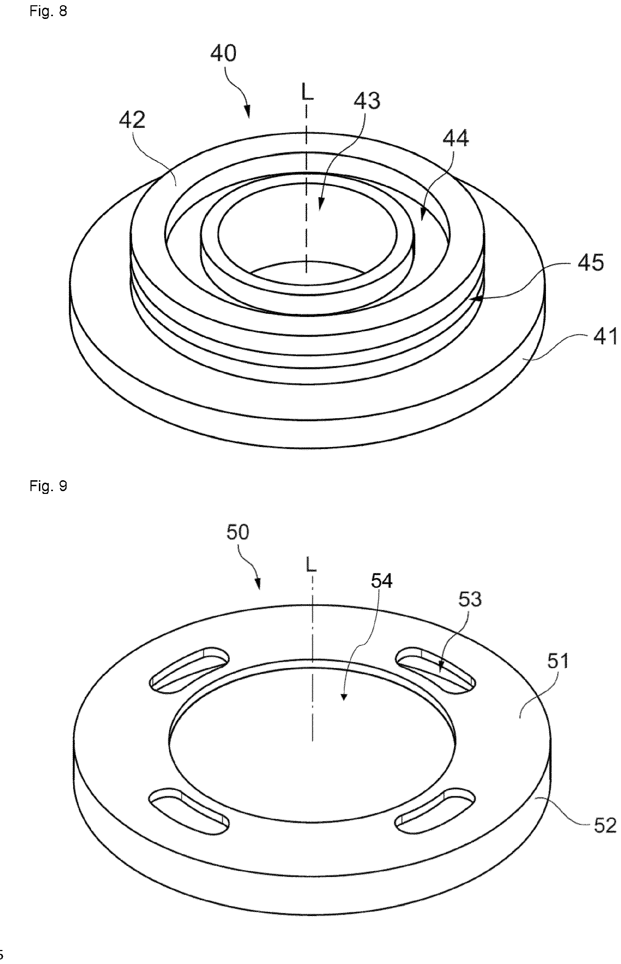

Fig. 2 is a cutaway perspective view of the assembled device 1 comprising a first part 10 (see Fig 4 and 5), a second part 20 (see Fig 6 and 7), a window 30, a sealing part 40 (see Fig. 8) and an insulating part 50 (see Fig. 9). Fig. 3 is a perspective bottom view of the assembled device 1.

As best seen in Fig. 4 and 5, the first part 10 of the device 1 has a cylindrical shape with a circular cross-section perpendicular to a longitudinal axis L forming the central cylinder axis. The first part 10 (which may be formed from an electrically conductive material) comprises an opening 14 (here, a through hole) extending along the longitudinal axis L through the entire first part 10. Furthermore, the first part 10 comprises a disc portion 11 and a side wall 12 extending circumferentially around the longitudinal axis L. The side wall 12 comprises a circumferentially extending notch 13.

At the bottom side of the first part 10, as best seen in Fig. 5, a cavity 19 is formed inside of the circumferential side wall 12, which extends towards the bottom surface 11a of the disc portion 11. The bottom surface 11a comprises a central recess 15 with a circular cross-section perpendicular to the longitudinal axis L. The opening 14 is arranged centrally in the recess 15.

The first part 10 further comprises four first through holes 16, which are equally spaced around the central opening 14, and four second through holes 17 equally spaced around the opening 14 and arranged radially inside of the first through holes 16 in respect of the longitudinal axis L. The first through holes 16 each comprise an inner thread 16a for receiving corresponding outer threads e.g. of connecting members, such as screws, inserted into the first through holes 16 to connect the second part 20 (see Fig. 6 and 7) to the first part 10. The first through holes 16 and the second through holes 17 extend parallel to the longitudinal axis L throughout the disc portion 11. In particular, the second through holes 17 can be used to insert a tool to separate the first part 10 from the second part 20 during disassembly of the device 1.

As shown in Fig. 4 and 5, the disc portion 11 of the first part 10 further comprises a plurality of bores 18 extending in a radial direction in respect of the longitudinal axis L.

The second part 20 (e.g. formed from an electrically conductive material) of the device 1 is depicted in Fig. 6 and 7. The second part 20 comprises a disc portion 21 and a cylinder portion 22, both having a cylindrical shape with a circular cross-section perpendicular to a longitudinal axis L forming the central cylinder axis. The disc portion 21 and the cylinder portion 22 are coaxially arranged with respect to the longitudinal axis L, and the cylinder portion 22 comprises a smaller diameter in a radial direction with respect to the longitudinal axis L compared to the diameter of the disc portion 21.

As shown in Fig. 6, the cylinder portion 22 comprises a surface 23 extending perpendicular to the longitudinal axis L and an indentation 24 extending circumferentially around the longitudinal axis L, the indentation 24 being configured for insertion of the seal 29, part of which is schematically depicted in Fig. 2.

Fig. 7 shows a surface of the disc portion 21 opposite the cylinder portion 22, which comprises four first through holes 25 which are equally spaced around the circumference of the disc portion 21 and extend parallel to the longitudinal axis L through the disc portion 21. The first through holes 25 are configured to be aligned with the first through holes 16 of that the first part 10 when the first part 10 and the second part 20 are assembled to form the device 1 as shown in Fig. 2.

As best observed from Fig. 2, the first through holes 25 of the second part 20 each comprise a first section 25a and a second section 25b, wherein the first section 25a has a greater diameter perpendicular to the longitudinal axis L than the second section 25b. When the first part 10 and the second part 20 are assembled and connected by connecting members, such as screws, the first sections 25a of the first through holes 25 may each harbor an enlarged head of a respective connecting member, while an outer thread of the respective connecting member engages the corresponding inner thread 16a of a corresponding first through hole 16 of the first part 10.

The second part 20 further comprises second through holes 26 which are arranged radial radially inside of the first through holes 25 and equally spaced around the circumference of the disc portion 21 in respect of the longitudinal axis L. These second through holes 26 can be used to insert a tool to separate the sealing part 40 from the second part 20 during disassembly of the device 1.

Furthermore, the second part 20 comprises a first bore 27 and a second bore 28 for connection of an electrical lead arranged near the center of the disc portion 21, wherein the second bore 28 comprises an inner thread 28a for receiving a corresponding outer thread.

Fig. 8 shows a perspective view of the sealing part 40, which may be formed from an electrically insulating material. The sealing part 40 comprises a disc portion 41 and a cylinder portion 42, which are coaxially arranged with respect to a central longitudinal axis L, and both have a circular cross-section perpendicular to the longitudinal axis L. The central through hole 43 extends through the sealing part 40 parallel to the longitudinal axis L.

The cylinder portion 42 has a smaller diameter perpendicular to the longitudinal axis L compared to the disc portion 41 and comprises a first groove 44 and a second groove 45 each extending circumferentially in respect of the longitudinal axis L. The first groove 44 is open in the axial direction in respect of the longitudinal axis L towards the side of the sealing part 40 opposite the disc portion 41. In contrast, the second groove 45 is open in the radial direction in respect of the longitudinal axis L towards the periphery of the sealing part 40.

Furthermore, as shown in Fig. 2, the disc portion 41 comprises a third groove 46 extending circumferentially around the longitudinal axis L and open in the axial direction in respect of the longitudinal axis L. As indicated schematically in Fig. 2, a first gasket 47 may be inserted in the first groove 44, a second gasket 48 may be inserted in the second groove 45 and the third gasket 49 may be inserted in the third groove 46. Only a part of the first gasket 47, the second gasket 48 and the third gasket 49 is depicted in the in Fig. 2 for better visibility of the first groove 44, the second groove 45 and the third groove 46 in the cutaway view.

Fig. 9 shows an insulating part 50 from an electrically insulating material, such as a plastic. The insulating part 50 comprises a disc portion 51 having a circular cross-section in respect of a longitudinal axis L and a rim portion 52 extending circumferentially around the longitudinal axis L. The disc portion 51 comprises a central through hole 54, and four oblong holes 53 spaced at equal distances around the circumference of the disc portion 51.

To assemble the parts to form the device 1 as shown in Fig. 2 and 3, the window part 31 is placed above the opening 14 of the first part 10. The first gasket 47 is then inserted in the first groove 44, the second gasket 48 is inserted in the second groove 45 and the third gasket 49 is inserted in the third groove 46 of the sealing part 40 and the cylinder portion 42 of the sealing part 40 is inserted into the recess 15 of the disc portion 11 of the first part 10.

Subsequently, the insulating part 50 and the second part 20 with the seal 29 placed in the indentation 24 of the cylinder portion 22 are inserted in the cavity 19 of the first part 10, with the cylinder portion 22 of the second part 20 extending through the through hole 43 of the sealing part 40.

The first through holes 16 of the first part 10 are aligned with the first through holes 25 of the second part 20 and connecting members, such as screws are inserted in the aligned first through holes 16, 25, whereby an outer thread of a respective connecting member is inserted into the inner thread 16a of the first through holes 16 of the first part 10. By tightening the connecting members, the first part 10 is tightly connected to the second part 20.

Moreover, as shown in Fig. 2, the diameter of the cylinder portion 22 of the second part 20 is smaller than the diameter of the opening 14 of the first part 10. Due to the connection between the first part 10 and the second part 20, the cylinder portion 22 exerts a force on the window part 31 from below, resulting in the window part 31 being bent, such that the convex shape of the second surface 33 of the window 30 is generated.

In the assembled device 1, the chamber 60 is formed between the surface 23 of the second part, and the first surface 32 of the window part 31. Before connecting the second part 20, an electrolyte 80 and an anode 90 are provided on top of the first surface 32 of the window part 31 to form the electrochemical cell. The cathode 70 can be formed by the window part 31 or can optionally be placed on the first surface 32 of the window part 31 prior to providing the electrolyte 80 and the anode 90 on the first surface 32.

In the depicted example, the first part 10 of the device 1 is in electrically conducting contact with the cathode 70 and the second part 20 is in electrically conductive contact with the anode 90. Consequently, electrical leads can be placed in the bore 18 of the first part 10, and the first bore 27 or the second bore 28 of the second part 20 to obtain electrical measurements of the electrochemical cell. In case of the second bore 28 of the second part 20, a connector with an outer thread corresponding to the inner thread 28a of the second bore 28 can be used to tightly connect the electrical lead to the second part 20.

A tight seal between the chamber 60 and the outside is provided between the second part 20 and the sealing part 40 by the seal 29 and the third gasket 49, between the sealing part 40 and the window part 31 by the first gasket 47 and between the sealing part 40 and the first part 10 by the second gasket 48.

When the parts of the device 1 assembled as shown in Fig. 2, a force is applied onto the window part 31 by means of the second part 20, resulting in the convex shape of the second surface 33 of the window 30.

### Example 1- Operando X-ray study of a Na-ion battery cathode

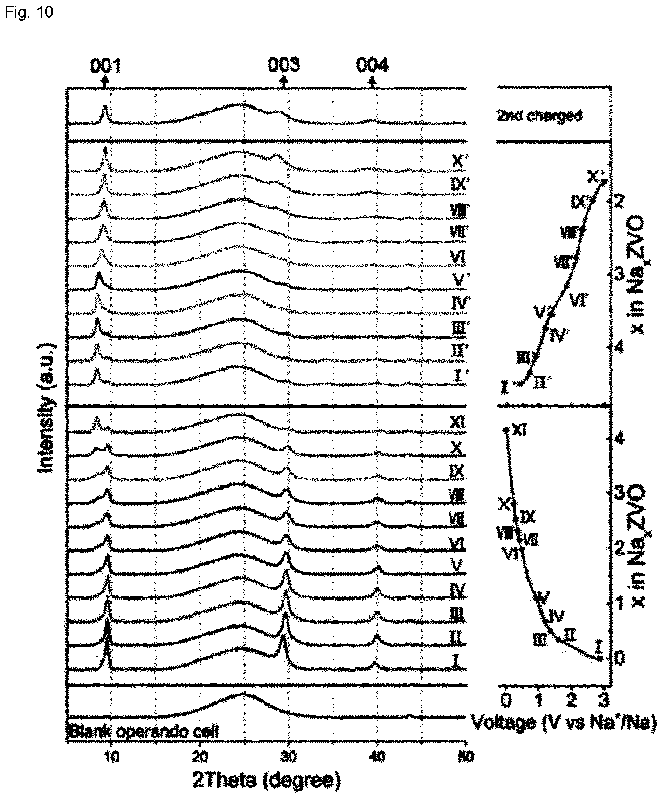

The device according to the invention was used to capture real-time structural evolution of a Na⁺ storing cathode material, suitable for Na-ion batteries. The plot of Fig. 10 shows X-ray diffraction patterns of the cathode as a function of Na+ storage, revealing reversible structural evolution as a function of battery charge/discharge, which is crucial for stable cycling performance. Corresponding battery charge/discharge profiles are shown on the right side of Fig. 10.

### Example 2 - Operando X-ray and operando UV-Vis study of an aqueous Zn battery cathode

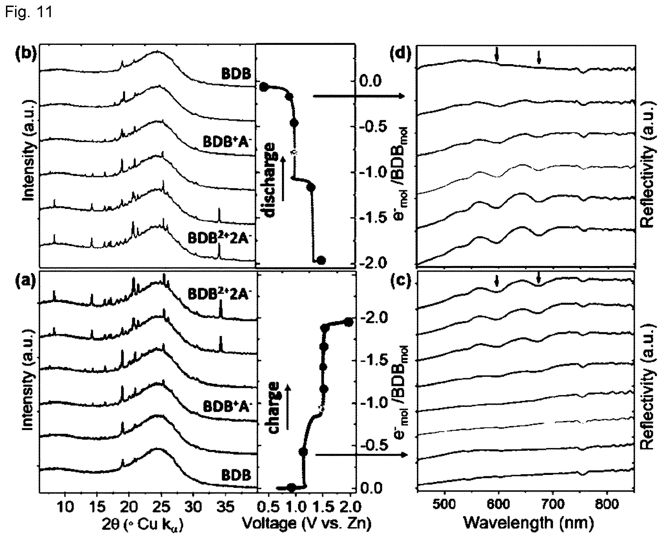

The device according to the invention was further used for in-situ structure and phase evolution analysis by X-ray (Fig. 11 a and b) and in-situ solid-state UV-Vis spectroscopic analysis (c and d) of an organic cathode material for aqueous Zn batteries. Panels a and b of Fig. 11 show the phase evolution of the organic electrode as a function of charge/discharge and Fig. 11c and d display the change in UV-Vis signature of the electrode as a function of battery cycling.

**List of reference signs**

| | |
|---|---|
| 1 | Device |
| 10 | First part |
| 11 | Disc portion |
| 11a | Bottom surface |
| 12 | Side wall |
| 13 | Notch |
| 14 | Opening |
| 15 | Recess |
| 15a | Inner wall |
| 16 | First throuqh-hole or bore |
| 16a | Inner thread |
| 17 | Second though-hole |
| 18 | Bore |
| 19 | Cavity |
| 20 | Second part |
| 21 | Disc portion |
| 22 | Cylinder portion |
| 23 | Surface |
| 24 | Indentation |
| 25 | First through-hole |
| 25a | First section |
| 25b | Second section |
| 26 | Second through-hole |
| 27 | First bore |
| 28 | Second bore |
| 28a | Inner thread |
| 29 | Seal |
| 30 | Window |
| 31 | Window part |
| 32 | First surface |
| 33 | Second surface |
| 40 | Sealing part |
| 41 | Disc portion |
| 42 | Cylinder portion |
| 43 | Through-hole |
| 44 | First groove |
| 45 | Second groove |
| 46 | Third groove |
| 47 | First gasket |
| 48 | Second gasket |
| 49 | Third gasket |
| 50 | Insulating part |
| 51 | Disc portion |
| 52 | Rim portion |
| 53 | Hole/oblong hole |
| 54 | Through-hole |
| 60 | Chamber |
| 70 | Cathode |
| 80 | Electrolyte |
| 90 | Anode |
| L | Longitudinal axis |
| I | Incident beam |
| R | Reflected beam |
| θ | Angle |

## Claims

1. A device (1) for in-operando monitoring of an electrochemical cell comprising a chamber (60) for receiving a cathode (70), an anode (90) and an electrolyte (80) forming an electrochemical cell, wherein the device (1) comprises a window (30) which is transparent to an electromagnetic radiation, particularly X-rays, infrared radiation, UV radiation or visible light, wherein the window (30) is arranged such that the electromagnetic radiation may enter and/or exit the chamber (60) through the window (30),
**characterized in that**
the window (30) comprises a first surface (32) facing the chamber (60) and a second surface (33) opposite the first surface (32), wherein the second surface (33) comprises a convex shape.

2. The device (1) according to claim 1, **characterized in that** the window (30) is configured such that the electromagnetic radiation is able to enter and/or exit the chamber (60) through the window (30) at an angle (2θ) between an incident beam (I) of the electromagnetic radiation entering the chamber (60) through the window (30) and a reflected or scattered beam (R) of the electromagnetic radiation exiting the chamber (60) through the window (30), wherein the angle (2θ) is less than 15°, particularly less than 10°, more particularly less than 5°, even more particularly 3°.

3. The device (1) according to claim 1 or 2, **characterized in that** the device (1) comprises a first part (10) comprising an opening (14), a second part (20) and a window part (31), wherein the window part (31) covers the opening (14), thereby forming the window (30), wherein the window part (31) is bent by means of a force exerted on the window part (31) by the second part (20), such that the convex shape of the second surface (33) of the window (30) is generated.

4. The device (1) according to claim 3, **characterized in that** the chamber (60) is formed between the window part (31) and the second part (20), wherein particularly the second part (20) forms the anode (90) or is in electrically conductive contact with the anode (90).

5. The device (1) according to claim 3 or 4, **characterized in that** the device (1) comprises a sealing part (40) contacting the first part (10), the second part (20) and the window part (31) to seal the chamber (60) from the exterior of the device (1), wherein particularly the second part (20) comprises an indentation (24), wherein a seal (29) is arranged in the indentation (24), wherein the seal (29) contacts the sealing part (40) to seal between the second part (20) and the sealing part (40).

6. The device (1) according to claim 5, **characterized in that** the sealing part (40) comprises a first groove (44), wherein a first gasket (47) is arranged in the first groove (44), wherein the first gasket (47) contacts the window part (31) to seal between the sealing part (40) and the window part (31).

7. The device (1) according to claim 5 or 6, **characterized in that** the sealing part (40) comprises a second groove (45), wherein a second gasket (48) is arranged in the second groove (45), wherein the second gasket (48) contacts the first part (10) to seal between the sealing part (40) and the first part (10).

8. The device (1) according to any one of the claims 5 to 7, **characterized in that** the sealing part (30) comprises a third groove (46), wherein a third gasket (48) is arranged in the third groove (46), wherein the third gasket (48) contacts the second part (20) to seal between the sealing part (40) and the second part (20).

9. The device (1) according to any one of the claims 5 to 8, **characterized in that** the sealing part (40) is formed from an electrically insulating material, wherein the sealing part (40) is arranged between the first part (10) and the second part (20).

10. The device (1) according to any one of the preceding claims, **characterized in that** the window (30), particularly the window part (31), is electrically conductive, wherein the window (30) forms the cathode (70) or a current collector in contact with the cathode (70), wherein particularly the first part (10) is in electrically conductive contact with the window (30), particularly the window part (31).

11. The device (1) according to any one of the preceding claims, **characterized in that**
a. the window (30), particularly the window part (31), is transparent to X-ray radiation, wherein particularly the window (30), particularly the window part (31), comprises or consists of glassy carbon, particularly black glassy carbon, and/or
b. the window (30), particularly the window part (31), is transparent to visible light, infrared radiation and/or UV light, wherein particularly the window (30), particularly the window part (31), comprises or consists of polyimide or polyethylene terephthalate.

12. The device (1) according to any one of the claims 3 to 11, **characterized in that** the device (1) comprises an insulating part (50) from an electrically insulating material, wherein the insulating part (50) is arranged between the first part (10) and the second part (20).

13. The device (1) according to any one of the claims 3 to 12, **characterized in that** the first part (10) and the second part (20) each comprise a plurality of first through-holes (16, 25), wherein each first through-hole (16) of the first part (10) is aligned with a corresponding first through-hole (25) of the second part (20), such that the first part (10) and the second part (20) are connectable by connecting members, particularly screws or bolts, inserted into the aligned first through-holes (16, 25) of the first part (10) and the second part (20), wherein particularly the first through-holes (16) of the first part (10) or the first through-holes (25) of the second part (20) comprise an inner thread (16a) configured to engage a corresponding outer thread of the connecting members.

14. The device (1) according to any one of the claims 3 to 13, **characterized in that** the first part (10) comprises a bore (18) for connecting a first electrical lead to the first part (10) and/or the second part (20) comprises a bore (27, 28) for connecting a second electrical lead to the second part (20), such that electrochemical cell can be discharged or charged by applying or drawing electrical energy by means of the first electrical lead and the second electrical lead.

15. A method for in-operando monitoring of an electrochemical cell using the device (1) according to any one of the claims 1 to 14, wherein a cathode (70), an anode (90) and an electrolyte (80) are received in the chamber (60) of the device (1) forming an electrochemical cell, and wherein an electromagnetic radiation, particularly X-rays, UV radiation, infrared radiation or visible light, is provided, wherein the electromagnetic radiation enters the chamber (60) through the window (30), and wherein reflected or scattered electromagnetic radiation exiting the chamber (609 through the window (30) is detected, wherein particularly a voltage between the cathode (70) and the anode (90) is detected.
